(19) Europäisches Patentamt
European Patent Office
Office européen des brevets

(11) **EP 3 493 443 B1**

(12) **EUROPEAN PATENT SPECIFICATION**

(45) Date of publication and mention
of the grant of the patent:
**12.08.2020 Bulletin 2020/33**

(51) Int Cl.:
***H04L 1/00*** *(2006.01)*      ***H04L 1/18*** *(2006.01)*

(21) Application number: **18208245.3**

(22) Date of filing: **06.12.2013**

(54) **METHOD AND DEVICE FOR DYNAMICALLY CONFIGURING EITHER FEC OR ARQ AS IMPULSE NOISE PROTECTION ON A COMMUNICATION LINE**

VERFAHREN UND VORRICHTUNG ZUM DYNAMISCHEN KONFIGURIEREN VON FEC ODER ARQ ALS IMPULSGERÄUSCHSCHUTZ AUF EINER KOMMUNIKATIONSLEITUNG

PROCÉDÉ ET DISPOSITIF POUR CONFIGURER DYNAMIQUEMENT SOIT UN MÉCANISME DE CODAGE OU DE RETRANSMISSION COMME PROTECTION CONTRE DES IMPULSIONS DE BRUIT SUR UNE LIGNE DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.06.2019 Bulletin 2019/23**

(62) Document number(s) of the earlier application(s) in accordance with Art. 76 EPC:
**13290302.2 / 2 882 125**

(73) Proprietor: **Alcatel Lucent**
**91620 Nozay (FR)**

(72) Inventors:
• **DARDENNE, Xavier**
**6041 Gosselies (BE)**
• **DROOGHAAG, Benoît**
**6041 Gosselies (BE)**

(74) Representative: **Nokia EPO representatives**
**Nokia Technologies Oy**
**Karakaari 7**
**02610 Espoo (FI)**

(56) References cited:
**EP-A1- 1 507 369      EP-A1- 2 369 781**
**JP-A- 2002 009 883     US-A1- 2003 126 238**
**US-B1- 6 182 264**

**Description**

**Field of the Invention**

The present invention generally relates to the automatic configuration of communication lines such as Digital Subscriber Lines or DSL. In the field of DSL, this automatic configuration and optimization of communication lines is also known as Dynamic Line Management or DLM. Typically, DLM is performed centrally at the side of the network operator by assessing physical layer or PHY performance characteristics from transceivers connected to the communication lines. Based on this assessment, the communication line is then reconfigured by updating the PHY related parameters of the transceivers.

More particularly the invention relates to the configuration of the error correction technique applied at the physical layer or PHY to mitigate impulse noise picked up by the communication lines. One error correction technique is based on Forward Error Correction combined with interleaving or IFEC and another technique is based on the retransmission of PHY data packets or data transmission units, abbreviated DTUs. When the PHY is configured for using IFEC based error correction it is referred to as being in IFEC mode and when it is configured for using retransmissions for error correction it is referred to as being in RTX mode.

**Background of the Invention**

Digital Subscriber Line or DSL techniques allow connecting end users to the internet or any other data network over traditional twisted pair communication lines. Typically, the communication lines run from the user premises to a Digital Subscriber line Access Multiplexer or DSLAM where a bundle of communication lines is terminated. The DSLAM is then further connected to a backbone for example over a fibre link or high speed Ethernet link.

DSL lines are susceptible to noise degrading the communication signals on the line resulting in a lower net data throughput feasible over the DSL line. Two types of noise are considered, stationary noise and impulse noise.

The stationary noise takes the form of a constant or slowly varying noise background and is mainly caused by crosstalk picked up from neighbouring lines from the bundle. The main consequence of stationary noise is that it limits the rate at which a line can synchronize. Techniques such as vectoring have been developed to mitigate the impact of stationary noise and to increase the achieved data rate.

Impulse noise or IN on the other hand consists of short bursts of noise that have a relatively short duration but a high amplitude resulting in a total loss of the actual communication signal. These bursts of noise can either occur randomly in time as a SHINE or Single High Impulse Noise Event or be repetitive and follow a regular pattern as REIN or Repetitive Impulse Noise. A typical source of SHINE is the on or off switching of electrical appliances in the vicinity of a modem. REIN on the other hand is typically caused by electrical interference from a running electrical device. The frequency of occurrence then corresponds to a multiple of the operating frequency of the electricity network, for example 50Hz or 60Hz. Data loss caused by impulse noise can be mitigated by Impulse Noise Protection mechanisms or INP.

A first INP mechanism is by using a combination of Forward Error Correction or FEC and interleaving denoted as IFEC impulse noise protection. In DSL, the IFEC is typically implemented by a Reed-Solomon (RS) coder and a data interleaver spreading the burst of errors from the impulse noise over several codewords of the RS coder. However, a drawback of the IFEC mechanisms is that this type of INP is constantly consuming bandwidth as redundancy is introduced to all data even when no impulse noise is present.

A second INP mechanism is based on retransmissions of data that was corrupted by impulse noise. These retransmission are at the physical layer or PHY where a Data Transmission Unit or DTU is retransmitted when corrupted. An implementation for this technique for DSL service providers is described under the ITU-T G.998.4 standard and is also referred to as G.INP, RTX, or ARQ (Automatic Repeat Query).

One of the big advantages of RTX versus IFEC lies in the fact that the bitrate overhead needed for data retransmission is only used when necessary, i.e. only when a data retransmission is needed. As a result, when there is little impulse noise and, thus, no retransmissions are required, no overhead is introduced and the full net data rate is available for user traffic.

As RTX only consumes bandwidth when needed, it is the ideal INP mechanism in most cases. However, in some specific noise environments, RTX doesn't work very well as it is not able to correct all transmission errors while still consuming a lot of bandwidth. Moreover, in some of these cases, IFEC can be much more efficient and succeed in correcting most or all errors while consuming less bandwidth than RTX.

The publication US2003126238A1 discloses a data communication system in which either ARQ or FEC are selected according to the channel conditions (BER). It is specified that FEC processor may also implement interleaving. The publication EP1507369A1 discloses an information processing method in which in case of very low error rate, the error control is switched off, in case of low error rate, ARQ is selected and in case of high error rate, FEC is selected. This error control is performed at RTP/RTCP layer. The publication JP2002009883 discloses a method to switch between FEC and ARQ according to a comparison between the measured error rate / data throughput and a predetermined threshold. If FEC is selected, there is a possibility to switch back to ARQ and reciprocally. The publication US6182264B1 discloses a system in which, in case of good channel conditions (low error rate, good signal quality), only CRC is selected as error control mechanism. In case of worse channel conditions, FEC is selected and in case of bad channel conditions, FEC and ARQ are selected. The publication EP2369781 A1 discloses in a DSL system, a method to switch from a first operation mode associated with a first quality of service and a first throughput, to a second operation mode associated with a second quality of service and a second, reduced throughput in case of bad channel conditions.

## Summary of the Invention

It is an object of the invention to provide a method and a system for configuring Impulse Noise Protection INP on a communication line, which does not show the drawbacks of the prior art.

Accordingly, independent claim 1 defines a method according to the invention. Independent claim 8 defines the corresponding system according to the invention. Preferred embodiments are defined in the dependent claims.

## Definitions

The following description and embodiments will be better understood in light of the following definitions. Most of these definitions define terms that are commonly used in the field of DSL communication lines or in the wider field of telecommunication.

Net Data Rate or NDR is the total bitrate available on a communication line at the PHY layer when no retransmissions occur. In the case of a DSL line, it is the data rate at which the line is synchronized.

Error-Free Throughput or EFTR is the actual data rate available for user traffic. It consists of the NDR minus the overhead needed for retransmissions. When no retransmission occurs, the EFTR equals the NDR. The EFTR is varying, depending on impulse noise conditions.

minINP_SHINE is a configuration parameter describing the expected number of consecutive Discrete Multi-Tone or DMT symbols that could be affected by SHINE events, i.e. an isolated burst of impulse noise. It then also describes the minimum level of impulse noise protection (INP) against SHINE events, required for error-free transmission in the expected noise conditions.

minINP_REIN is a configuration parameter describing the expected number of consecutive DMT symbols that could be affected by REIN, i.e. impulse noise occurring at a given rate. In a typical DSL configuration, this rate can be configured through the IAT_REIN or Inter-arrival Time for REIN parameter and usually corresponds to 100Hz in Europe and 120Hz in North America. minINP_REIN then also describes the minimum level of INP against REIN, required for error-free transmission in the expected noise conditions.

Shineratio is a parameter describing the amount of overhead that is expected to be necessary for retransmission of corrupted DTUs that have been affected by SHINE. This ratio is given as a percentage of the NDR and can be configured between 0.1% and 10%.

The expected Retransmission Overhead or RTX_OH is the portion of the NDR that is used for retransmission of corrupted DTUs, and which is thus not available for user traffic. From the G.INP standard, the expected retransmission overhead is computed as follows:

$$RTX\_OH = SHINE\_OH + REIN\_OH + STAT\_OH$$

The SHINE_OH or SHINE overhead is the expected overhead needed to mitigate SHINE events and corresponds to the Shineratio.

The REIN_OH or REIN overhead is the expected overhead needed to mitigate REIN events and may be approximated from minINP_REIN. If a data symbol rate of 4000 symbols per seconds is assumed, the REIN_OH may be approximated by:

$$REIN\_OH \approx (minINP\_REIN / 40) + \alpha$$

Where $\alpha$ is an $\alpha$-priori unknown quantity, ranging from 1.25% to 10% and depending on framing parameters.

The STAT_OH or static overhead is the expected overhead needed to mitigate stationary noise. In DSL standards is assumed to be $1.10^{-4}$.

Expected Throughput or ETR is a parameter that is calculated during synchronization of a communication line and represents the EFTR that would be obtained if noise conditions are exactly requiring the expected amount of overhead, as computed from the configured Shineratio and minINP_REIN and thus from the RTX_OH. It is therefore computed as follows:

$$ETR = (1 - RTX\_OH) * NDR.$$

Therefore, if the actual amount of overhead needed for retransmissions is less than what was expected then the following condition applies:

$$NDR \geq EFTR > ETR$$

If the actual amount of overhead needed for retransmissions is exactly what was expected, the following condition applies:

$$NDR > EFTR = ETR.$$

If the actual amount of overhead needed for retransmissions is higher than what was expected, the following condition applies:

$$NDR > ETR > EFTR.$$

In other words, the ETR is an estimation of the EFTR computed during synchronization of a communication line based on the assumption that the configured noise conditions defined by the Shineratio and minINP_REIN exactly correspond to the observed noise. However, the exact noise conditions are never known a priori by the network operators responsible for the configuration of the communication line and hence, the ETR may be significantly overestimated in case noise conditions are underestimated or may be significantly underestimated in case noise conditions are overestimated.

minEFTR or minimum EFTR is a parameter reporting the minimum EFTR observed over a given observation interval which may for example be 15 minutes, 1 hour or 1 day. The considered EFTR to obtain the minEFTR is the averaged value over a 1 second window.

EFbits or Error-free bits is the amount of bits that were sent over a communication line without errors during a certain time interval. By dividing this amount of bits by the duration of the respective time interval, an estimation of the average EFTR over this interval is obtained.

**Brief Description of the Drawings**

Fig. 1 illustrates a data access network comprising a Dynamic Line Management device;

Fig. 2 illustrates the throughput and error performance on a DSL line;

Fig. 3 illustrates a flow diagram for configuring impulse noise protection on a communication line according to an embodiment of the invention;

Fig. 4 illustrates a flow diagram for configuring impulse noise protection on a communication line according to another embodiment of the invention; and

Fig. 5 illustrates a flow diagram for configuring impulse noise protection on a communication line according to an embodiment useful for understanding of the invention.

**Detailed Description of Embodiment(s)**

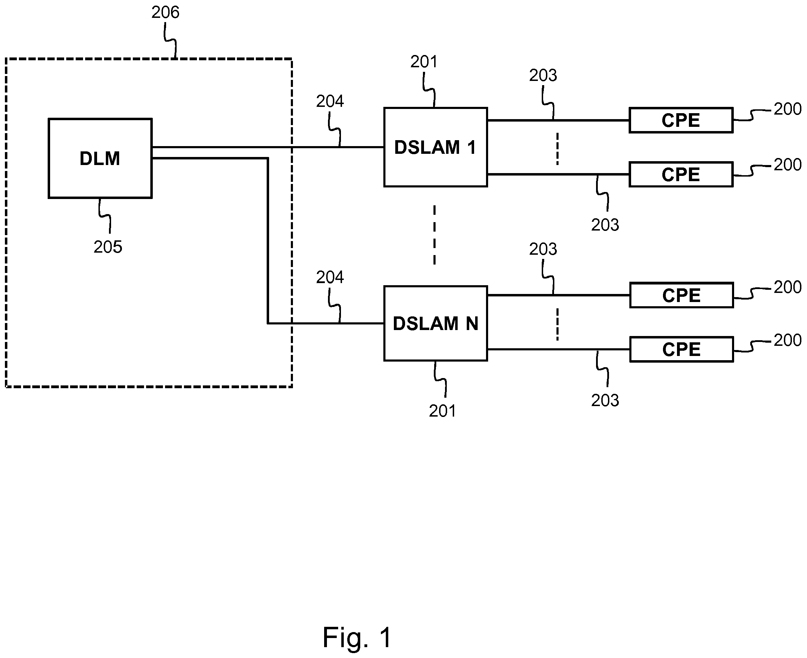

Fig. 1 illustrates a network topology of a data access network providing data access over Digital Subscriber Line or DSL technology. Customer Premises Equipment or CPE 200 is connected over a twisted pair such as for example a twisted copper telephone line, to a Digital Subscriber line Access Multiplexer or DSLAM 201. This DSLAM 201 modulates and demodulates data that is sent and received over the DSL lines 203. On the other side, it also multiplexes this data over a backbone link 204 to the network operator's Central Office or CO 206. This backbone link 204 is typically a high speed data link such as an optical link or high speed Ethernet link.

In order to manage the configuration of the DSL line 203 a device 205 is installed in the CO 206 for performing Dynamic Line Management or DLM. During operation, the DSLAM 201 and CPE 200 send performance data to the DLM device 205. Then, at regular time intervals, the DLM device 205 reconfigures the DSL lines in order to improve the performance of the DSL lines 203. These time intervals may range from several hours to several days balancing the improved performance with the lost data connection during reconfiguration for the CPE 200 and thus the network operator's customer.

When reconfiguring a communication line 203, the DLM device 205 may reconfigure the physical layer or PHY parameters of the transceivers connected to the line, i.e. the transceivers in the DSLAM 201 and the transceivers in the CPE 200. One set of PHY parameters and performance characteristics is related to the error coding or error correction of data. One way of error correction is to configure the line 203, i.e. the transceivers connected to a line 203, to use retransmission of DTUs sent over the line. This technique is described in the ITU-T G.998.4 standard for DSL lines and is also referred to as Automatic Repeat Query or ARQ, as G.INP or as RTX mode. Another way or error correction is to configure the line 203 to use Forward Error Correction combined with interleaving also referred to as IFEC mode. One Forward Error Correction technique used in DSL lines is based on cyclic error-correcting codes, more particularly on Reed-Solomon codes.

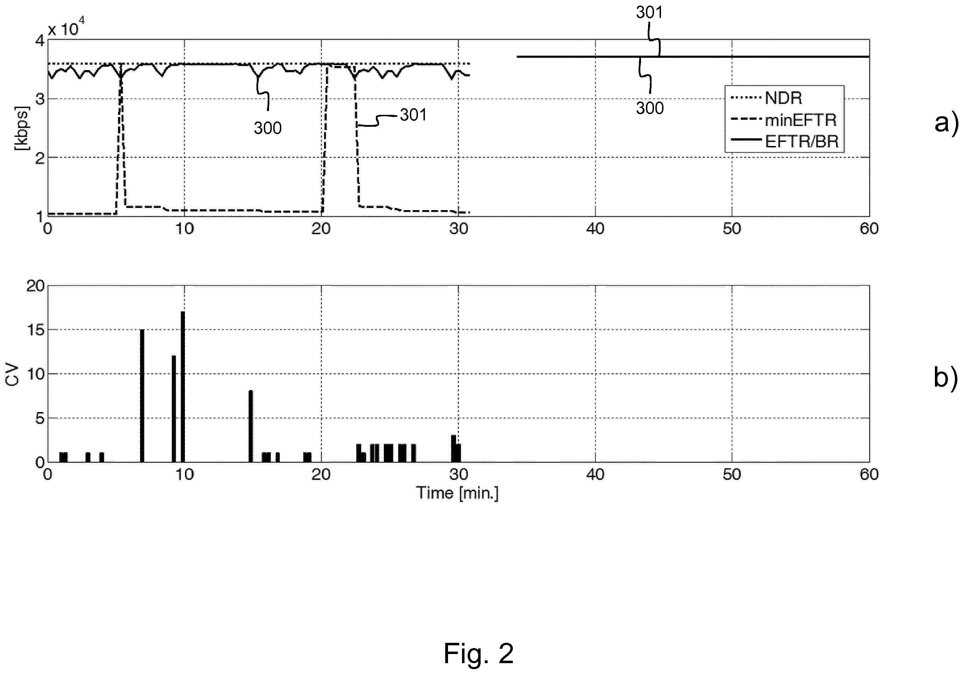

Fig. 2 shows performance characteristics of a VDSL2 communication line 203 acquired by a DLM device 205. The monitored line 203 has a length of 400 metres and, as indicated by the X-axis, the line is first configured in RTX mode for 30 minutes and then reconfigured to IFEC mode for another 30 minutes. The first graph, i.e. graph a), presents the EFTR 300 in kilobits per second or kbps as a function of time. While in RTX mode, the EFTR, which is averaged over 20 seconds periods in this graph, is evaluated every 20 seconds from the Error-free bits. This average EFTR varies between around 33 Megabits per second or Mbps and 36Mbps, depending on noise conditions. Hereby, 36Mbps is the upper limit and corresponds to the NDR in RTX mode. Graph a) also shows the minimum EFTR 301, i.e. the minimum value of the EFTR averaged over 1 second during a 15 minutes time interval. Although the EFTR 300 averaged over 20 second periods is always above 33Mbps, the minimum EFTR 301 regularly drops as low as 10Mbps. In other words, regularly, more than 65% of the available bandwidth is used for retransmissions during a whole second, leaving only about one third of the net data rate or NDR for actual user traffic. Regularly leaving so little bandwidth for the application layers for at least a whole second may have an impact on the quality of service or QoS.

On the other hand, after being reconfigured to IFEC mode, the EFTR 300 is constant at 37Mbps corresponding to the NDR in IFEC mode. Therefore, the available data rate is higher in IFEC mode than in RTX, around 10% higher on average. Moreover, the minimum EFTR 301 never drops to such low levels as in RTX mode. Therefore, in the case illustrated by Fig. 2 the IFEC mode performs better the RTX mode.

Graph b) of Fig. 2 illustrates the amount of code violations or CVs received and thus the amount of corrupted DTUs received and not corrected by the PHY layer. Due to the upper limit in the amount of retransmissions that may be applied for a data unit, not all corrupted data unit were retransmitted in RTX mode resulting in the CVs in RTX mode. Depending on the higher communication layers, the corrupted data may still be retransmitted. For example, if a TCP application layer is used, the corrupted data will be retransmitted there. This will however further reduce the effective data throughput. In IFEC mode on the other hand, no transmission errors or CVs are left, i.e. all corrupted data units are corrected by the FEC decoder.

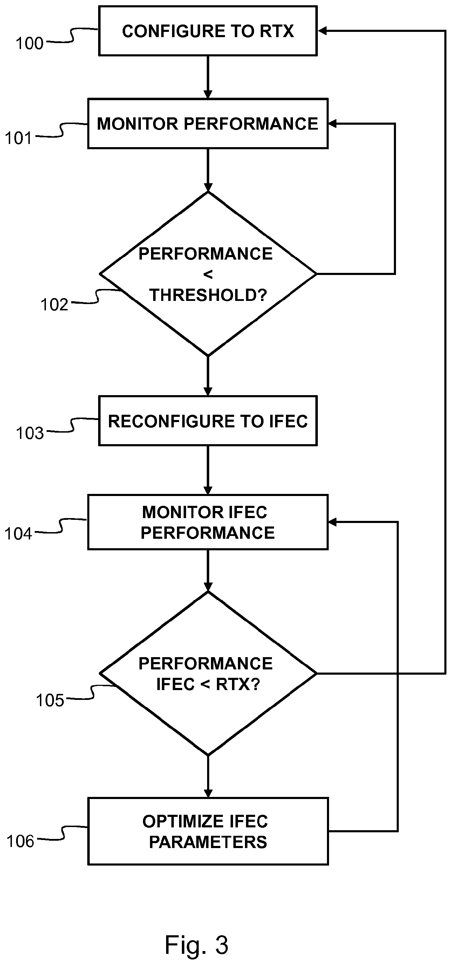

Fig. 3 illustrates a flow diagram of the functionality implemented in the DLM device 205 that allows identifying the case illustrated by Fig. 2 and thereby reconfiguring a communication from RTX mode to IFEC mode.

In a first step 100, the DLM device 205 configures a communication line 203 in RTX mode. Then, in a step 101, the communication line is monitored for a certain time interval. After this interval, in a step 102, it is assessed whether this performance is as expected, i.e. if it is better than a certain predefined or determined threshold. Then, if the performance is below the threshold, the communication line is reconfigured to use IFEC mode for error correction in a step 103. When in this IFEC mode, the performance of the communication line is again monitored for a certain time period in a step 104. After this time interval, the monitored performance in RTX mode that was the trigger to reconfigure to IFEC mode is compared with the monitored performance in IFEC mode in a step 105. If the performance has not improved, the DLM device 205 reconfigures the communication line 203 back to RTX mode. If the performance has improved, the communication line is kept in IFEC mode and the DLM device 205 keeps monitoring the performance in IFEC mode according to step 104.

Optionally after deciding to stay in IFEC mode in step 105, the IFEC mode parameters may be further optimized in order to further improve the performance.

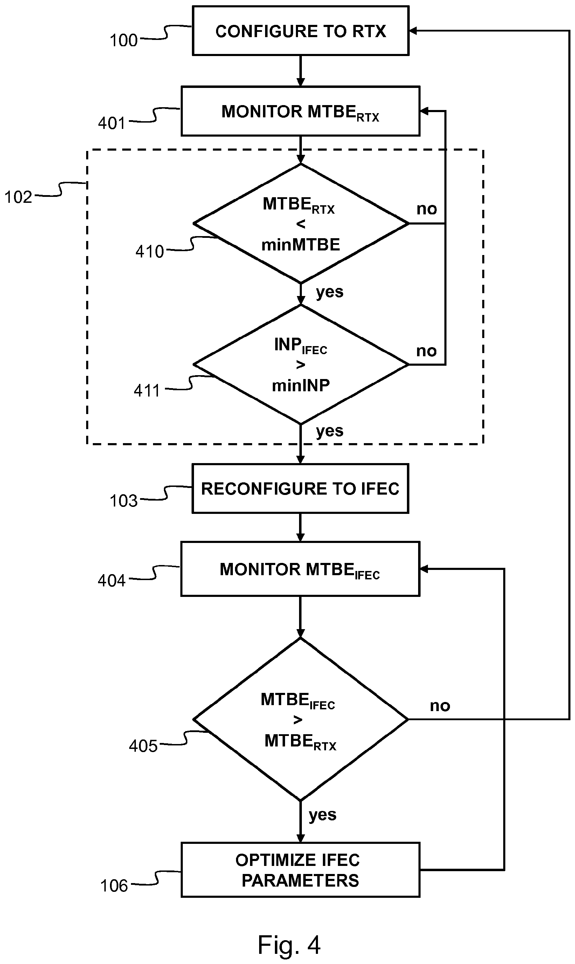

According to an embodiment of the invention, the performance is monitored by the Mean Time Between Error or MTBE, i.e. the mean time between the occurrence of an error or Code Violation. This is illustrated by Fig. 4 which further details the steps of Fig. 3 according to this embodiment. There, step 401 monitors the MTBE and checks in step 410 if:

$$MTBE < minMTBE$$

whereby minMTBE is a preconfigured minimum MTBE used as a threshold.

If so, it is decided that the RTX mode is not performing well enough and the parameters for the IFEC mode are determined. These are determined from the following formula calculating the induced data overhead caused by the IFEC correction mechanism:

$$OH_{IFEC} = \frac{INP}{2*Delay}$$

whereby:

- $OH_{IFEC}$ is the induced data overhead caused by the IFEC correction mechanism;
- $INP$ is the Impulse noise Protection level which stands for the number of consecutive erroneous DMT symbols that the IFEC mode should be able to correct;
- $Delay$ is the maximum delay allowed for the interleaver.

The Delay is a fixed parameter determined by the network operator and depending on the type of service offered over the communication line. The other parameter determining the IFEC mode is then the INP level and calculated as follows:

$$INP = 2 * Delay * OH_{IFEC} = 2 * Delay * OH_{RTX}$$

The INP IFEC parameter is thus chosen such that the overhead $OH_{IFEC}$ in IFEC mode depends on the overhead $OH_{RTX}$ in RTX mode. The overhead in the RTX mode is thereby derived from the monitored Error Free Throughput or EFTR and the net data rate or NDR:

$$OH_{RTX} = 1 - \frac{EFTR}{NDR}$$

Optionally, according to the step 411 it can be verified whether the calculated INP level is greater than a predefined minimum INP level or minINP. This minINP may then be determined by the network operator.

If the MTBE is below a minMTBE according to step 410 and if, optionally, the calculated INP level for the IFEC mode is greater than a predefined minIP according to step 411, then the DLM device 205 proceeds to step 103 and the communication line is reconfigured to IFEC mode according to the INP and Delay parameter. In step 404, the performance in IFEC mode is monitored by monitoring the MTBE in IFEC mode. In step 405, it is then checked if:

$$MTBE_{IFEC} > MTBE_{RTX}$$

whereby

$MTBE_{IFEC}$ is the MTBE in IFEC mode;
$MTBE_{RTX}$ is the MTBE in RTX mode.

If this is true, the IFEC mode performs better than the RTX mode and it is decided to stay in IFEC mode. If this condition is false, the IFEC mode does not perform better than the RTX mode and it is decided to reconfigure the communication line back to RTX mode by proceeding to step 100.

Optionally, also here the INP level may be further optimized in step 106 in order to improve the performance, i.e. in order to minimize the MTBE further. This may be beneficial as the INP level was initially chosen to provide the same overhead as in the RTX mode. Therefore, the INP level may still be further lowered as long as it is greater than

the minINP and as long as the condition under step 405 holds.

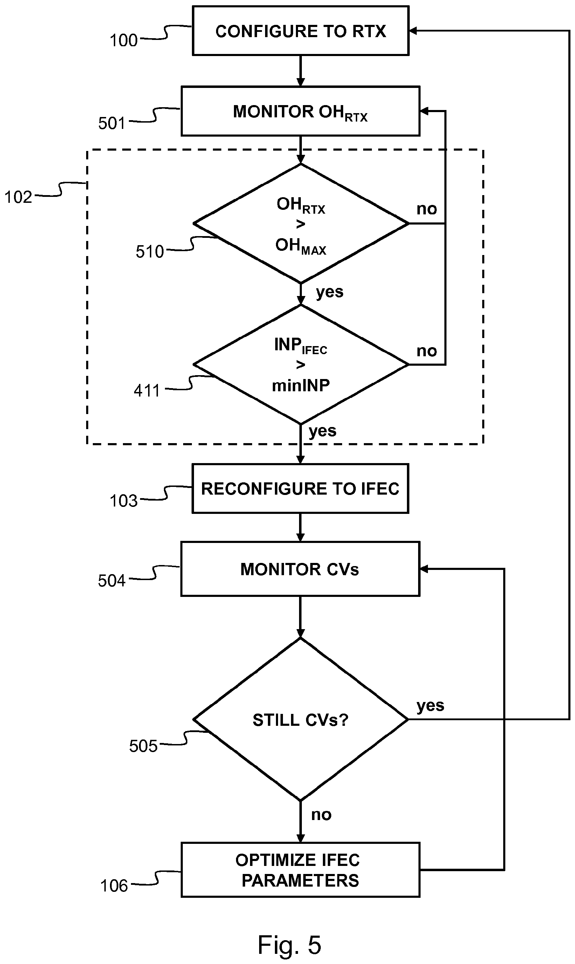

Fig. 5 illustrates another embodiment useful for the understanding of the invention, whereby the induced overhead is monitored as the performance rather than the MTBE as in Fig. 4. Therefore, in step 501 the overhead induced by retransmissions or $OH_{RTX}$ is monitored by the DLM device 205 and is expressed as:

$$OH_{RTX} = OH_{PL} + OH_{TL}$$

whereby

- $OH_{PL}$ is the overhead at the physical layer or PHY used for the retransmission of data units at the PHY;
- $OH_{TL}$ is the retransmission overhead at the transport layer needed to overcome the code violations that occurred at the PHY.

As higher level communication layers such as for example the TCP layer may also have built in mechanisms based on retransmissions, additional overhead may be caused outside the PHY because of code violations occurring in the PHY. The physical layer overhead OHPL may again be obtained from monitored physical layer parameters:

$$OH_{PL} = 1 - \frac{EFTR}{NDR}$$

The calculation of the overhead at the transport layer will then depend on the type of service offered, the applications running in the higher layers, the transport protocol used as well as the round trip time or RTT.

After a certain time, this overhead is compared with a predetermined threshold value $OH_{MAX}$ in the step 510:

$$OH_{RTX} > OH_{MAX}$$

If this condition is not true, the communication line is kept in RTX mode and further monitored in step 501. If the condition is false, the RTX mode underperforms and the IFEC mode INP level parameter is derived as in the previous embodiment:

$$INP = 2 * Delay * OH_{RTX}$$

whereby the $OH_{RTX}$ is now the sum of the physical layer and transport layer overhead.

Optionally, it may again be decided to stay in RTX mode according to the step 411 if the calculated INP level is below a predetermined minimum INP level minINP. If not, the communication line is reconfigured to IFEC mode in step 103 using the calculated INP level.

For the monitoring 504 of the IFEC performance, the code violations or CVs at the physical layer are monitored for a certain period. If, within this period, no code violation have occurred and thus all transmission errors have been corrected, it is assumed that IFEC mode performs better than RTX mode. If there would be remaining CVs in IFEC mode, this would imply an additional overhead at the transport layer level whereas the physical layer overhead was already chosen to be equivalent to the total $OH_{RTX}$. Therefore, the total IFEC overhead would then be bigger than the total RTX overhead. In other words, the new IFEC configuration would then perform worse than the original RTX configuration. This decision process is illustrated by step 505.

On the other hand, if the IFEC mode exhibits no CVs, the IFEC INP level can then be gradually reduced in order to further optimize the IFEC parameters as part of step 106. This reducing may be done until the $MTBE_{IFEC}$ approaches its minimal acceptable value for the service offered. The final IFEC configuration now exhibits a lower overhead and thus a higher effective bitrate than the initial RTX configuration.

The above embodiments have been described using a DLM device 205 for configuring the communication lines 203. This device may be a server or pool of servers whereby the functionality illustrated by Fig. 3, 4 and 5 runs as a service on this server or servers. The functionality may then be provided as software code which is compiled and run on one or more processors comprised in the DLM device 205. It is preferred that the DLM device 205 is located at the Central Office 206 as this central location enables the management of all communication lines 203 operated by the Central Office 206, i.e. by the network operator. It is however also possible to locate the DLM device 205 in other locations, for example near the DSLAM or even to embed it as an extra service within a single DSLAM thereby only managing the communication lines connected to this single DSLAM.

The following part of the description summarizes information useful for the understanding of the invention.

It is an object of the invention to alleviate the drawbacks of the prior art and to offer a solution that selects an optimal INP mechanism in all circumstances. This is achieved, in a first aspect, by a method for configuring Impulse Noise Protection or INP on a communication line at a physical layer or PHY comprising the following steps:

- configuring the PHY to use an RTX mode using retransmissions for INP;
- monitoring a performance of this RTX mode;
- reconfiguring the PHY to use an IFEC mode using forward error correction and interleaving for INP if the performance is below a certain threshold.

This communication line may be a DSL line connecting for example a modem at a user premises with a DSLAM. The communication line is configured to use either IFEC or RTX mode. By this configuring, transceivers at both end of the communication line are reconfigured to use these modes. This configuring may for example be part of Dynamic Line Management whereby the network operator managing the communication line remotely applies the configuring to the DSLAM responsible for the further configuration of the line, i.e. the configuration of the DSLAM itself and the modem at the CPE side. The performance is then measured at the PHY layer in the transceivers and the reconfiguring may be applied after receiving the monitored performance and detecting that the performance has dropped below a certain threshold or minimum value.

It is an advantage that the communication line is reconfigured according to the best performance and, hence, the communication line may deliver a higher data rate or better Quality of Service or QoS to the user.

Advantageously, the method further comprises:

- monitoring a performance in the IFEC mode;
- reconfiguring the PHY back to the RTX mode if the performance in this IFEC mode is below the performance in the RTX mode.

The performance is thus further monitored after the reconfiguration. As the method is empirical the reconfiguration from RTX to IFEC mode may actually result in a lower performance. It is therefore an advantage that the best performing mode is always selected, also if this best performing mode was the RTX mode.

More advantageously, the reconfiguring may further comprise:

- choosing parameters related to the IFEC mode such that overhead induced by the IFEC mode depends on observed overhead in the RTX mode.

The actual overhead in RTX mode is well known as the amount of retransmissions may be monitored at the PHY as is typically the case in DSL applications. The overhead in IFEC mode is fixed as for FEC coding the coding rate is a parameter chosen at configuration time. Therefore, the coding rate of the FEC mode and thus the overhead by the IFEC mode can be selected such that it is most close to the overhead monitored during the RTX mode.

It is an advantage that the performance measured in IFEC mode will be measured for the same coding overhead allowing a precise comparison between the two modes. Indeed, if an IFEC mode with larger overhead would be selected, a better performance in this mode would be caused by the larger coding rate and not by the intrinsic better performance of the IFEC on itself.

After the communication line has been configured to IFEC mode, the method may further comprise:

- further optimizing the parameters related to the IFEC mode.

Thus, in order to compare the performance in IFEC mode with the performance in RTX mode the parameters related to IFEC mode were chosen such that the overhead was close to the overhead in RTX mode. When it is decided to stay in IFEC mode these parameter are further optimized. It is thus an advantage that the performance in IFEC mode may even be further improved compared with the performance in RTX mode.

According to an embodiment of the invention, the performance of the RTX mode is related to a first mean time between transmission errors or first MTBE. The reconfiguring the PHY to use the IFEC mode is then only performed when the first MTBE is below a predetermined threshold MTBE.

With an error in MTBE it is meant that a PHY data packet or DTU was corrupted and could not be corrected by a retransmission. This may for example happen if the maximum allowed number of retransmissions in RTX mode was reached. Such an error is also referred to as a code violation or CV. The MTBE is then the mean time between successive CVs within a monitored time interval. The MTBE is a good indicator of the RTX performance as every CV indicates a failure of the RTX mode. When a CV occurs in the PHY layer, the error will have to be corrected in an upper network layer, for example in the TCP layer. The PHY layer will thus keep track of the CVs - which is the case in most DSL implementation - and report them. If the MTBE drops below a minimum MTBE and thus predetermined threshold MTBE, the reconfiguration to IFEC mode will be performed.

In this case, the reconfiguring of the PHY back to RTX mode is then preferably performed when a second MTBE in IFEC mode is below this first MTBE.

Similarly to the CVs in RTX mode, the PHY layer also keeps tracks of the CVs in IFEC mode. Therefore, an MTBE is also available in IFEC mode. The MTBE thus provides an easy and straightforward way to assess if the IFEC mode effectively performs better than the RTX mode.

According to an alternative embodiment, the performance of the RTX mode is related to communication overhead introduced by the RTX mode and by retransmissions at an application layer. The reconfiguring the PHY to use the IFEC mode is then only performed when the communication overhead is above a maximum allowed communication overhead.

Not only the code violations are thus taken into account but also possible retransmissions done at the higher layer because of the uncorrected corrupted DTUs. For example, a corrupted DTU may cause a retransmission in the TCP layer of the protocol stack, also generating overhead and thus lowering the actual throughput on the communication line. The generated overhead at the PHY layer and application layer are thus combined into the communication overhead. If this communication overhead is greater than a predefined communication overhead, the reconfiguration to IFEC mode is done.

It is an advantage that the impact of transmission errors is precisely verified by taking into account the retransmission at the higher application layer as this will result in more successful decisions to reconfigure the PHY to IFEC mode and thus deliver a higher QoS to the user.

Advantageously, the reconfiguring of the PHY back to RTX mode is then performed when there are still uncorrected transmission errors at the PHY in IFEC mode.

In other words, to assess whether IFEC mode performs better than RTX mode only the code violations, i.e. the transmission errors at the PHY layer, are considered. Whenever there are still code violations, the PHY layer is configured back to RTX mode.

Optionally for the above embodiments, the reconfiguring is only performed when the IFEC mode is able to correct a minimum number of consecutive erroneous Discrete Multi-Tone or DMT symbols sent over the communication line.

In other words, before reconfiguring to IFEC mode it is assessed if the IFEC mode with the parameters resulting in a similar overhead than the RTX mode can actually perform as minimally required, i.e. if it corrects this minimum number of consecutive erroneous DMT symbols. The capability to correct this number of symbols depend on these parameters but also on a maximum allowable delay for the interleaving which is a pre-set value determined by the required QoS.

It is an advantage that unnecessary reconfiguring to IFEC mode can be prevented by theoretically assessing the performance of the IFEC when applying the parameters causing the same amount of overhead than in RTX mode.

In a second aspect, the invention relates to a computer program product comprising computer-executable instructions for performing the method according to the first aspect when the program is run on a computer.

In a third aspect, the invention also relates to a computer readable storage medium comprising the computer program product according to the second aspect.

In a fourth aspect, the invention relates to data processing system programmed for carrying out the method according to the first aspect.

The invention also relates, in a fifth aspect, to a Dynamic Line Management or DLM device for configuring Impulse Noise Protection or INP on a communication line at a physical layer or PHY. The DLM device being further configured to:

- configure the PHY to use an RTX mode using retransmissions for INP;
- monitor a performance of the RTX mode;
- reconfigure the PHY to use an IFEC mode using forward error correction and interleaving for INP if the performance is below a certain threshold.

The Dynamic Line Management or DLM device may further be configured to:

- monitor a performance in IFEC mode;
- Reconfigure the PHY back to RTX mode if the performance in IFEC mode is below the performance in RTX mode.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A method for configuring Impulse Noise Protection INP on a communication line (203), the method comprising:

   - configuring (100) the communication line to use a retransmission mode for INP;
   - monitoring (101, 401) a first mean time between transmission errors in the retransmission mode;
   - if (102) the first mean time between transmission errors is below a threshold, then determining parameters for a Forward Error Correction FEC and interleaving mode for INP, and reconfiguring (103) the communication line to use the FEC and interleaving mode;
   - monitoring (104, 404) a second mean time between transmission errors in the FEC and interleaving mode;
   - if (105, 405) the second mean time between transmission errors is below the first mean time between transmission errors, then reconfiguring the communication line to use the retransmission mode.

2. A method according to claim 1, further comprising:

   - choosing parameters related to the FEC and interleaving mode such that overhead induced by the FEC and interleaving mode depends on observed overhead in the retransmission mode.

3. A method according to claim 2, further comprising:

   - further optimizing (106) the parameters related to the FEC and interleaving mode.

4. A method according to claim 1 wherein the reconfiguring is performed when (411) the FEC and interleaving mode is able to correct a minimum number of consecutive erroneous Discrete Multi-Tone DMT symbols sent over the communication line (203).

5. A computer program product comprising computer-executable instructions for performing the method according to claim 1 when the program is run on a computer.

6. A computer readable storage medium comprising the computer program product according to claim 5.

7. A data processing system programmed for carrying out the method according to claim 1.

8. A Dynamic Line Management DLM system (205) for configuring Impulse Noise Protection INP on a communication line (203), and comprising means configured for:

   - configuring (100) the communication line to use a retransmission mode for INP;
   - monitoring (101, 401) a first mean time between transmission errors in the retransmission mode;
   - if (102) the first mean time between transmission errors is below a threshold, then determining parameters for a Forward Error Correction FEC and interleaving mode for INP, and reconfiguring (103) the communication line to use the FEC and interleaving mode;
- monitoring (104, 404) a second mean time between transmission errors in the FEC and interleaving mode;
- if (105, 405) the second mean time between transmission errors is below the first mean time between transmission errors, then reconfiguring the communication line to use the retransmission mode.

9. A system according to claim 8, wherein the means are further configured for choosing parameters related to the FEC and interleaving mode such that overhead induced by the FEC and interleaving mode depends on observed overhead in the retransmission mode.

10. A system according to claim 9, wherein the means are configured for further optimizing (106) the parameters related to the FEC and interleaving mode.

**Patentansprüche**

1. Verfahren zum Konfigurieren eines Impulsrauschschutzes, INP, in einer Kommunikationsleitung (203), wobei das Verfahren Folgendes umfasst:

   - Konfigurieren (100) der Kommunikationsleitung, einen Weiterübertragungsmodus zum INP zu verwenden;
   - Überwachen (101, 401) einer ersten durchschnittlichen Zeit zwischen Übertragungsfehlern im Weiterübertragungsmodus;
   - Bestimmen dann, wenn (102) die erste durchschnittliche Zeit zwischen Übertragungsfehlern unter einem Schwellenwert liegt, von Parametern für einen Vorwärtsfehlerkorrektur- und Verschachtelungsmodus, FEC- und Verschachtelungsmodus, für den INP und Neukonfigurieren (103) der Kommunikationsleitung, um den FEC- und Verschachtelungsmodus zu verwenden;
   - Überwachen (104, 404) einer zweiten durchschnittlichen Zeit zwischen Übertragungsfehlern im FEC- und Verschachtelungsmodus und
   - dann, wenn (105, 405) die zweite durchschnittliche Zeit zwischen Übertragungsfehlern unter der ersten durchschnittlichen Zeit zwischen Übertragungsfehlern liegt, Neukonfigurieren der Kommunikationsleitung, den Weiterübertragungsmodus zu verwenden.

2. Verfahren nach Anspruch 1, das ferner Folgendes umfasst:

   - Wählen von Parametern in Bezug auf den FEC- und Verschachtelungsmodus derart, dass ein Mehraufwand, der durch den FEC- und Verschachtelungsmodus erzeugt wird, vom beobachteten Mehraufwand im Weiterübertragungsmodus abhängt.

3. Verfahren nach Anspruch 2, das ferner Folgendes umfasst:

   - weiteren Optimieren (106) der Parameter in Bezug auf den FEC- und Verschachtelungsmodus.

4. Verfahren nach Anspruch 1, wobei das Neukonfigurieren durchgeführt wird, wenn (411) der FEC- und Verschachtelungsmodus eine Mindestanzahl aufeinanderfolgender fehlerhafter diskreter Mehrtonsymbole, DMT-Symbole, die über die Kommunikationsleitung (203) gesendet werden, korrigieren kann.

5. Computerprogrammprodukt, das computerausführbare Anweisungen enthält, um das Verfahren nach Anspruch 1 durchzuführen, wenn das Programm in einem Computer ausgeführt wird.

6. Computerlesbares Speichermedium, das das Computerprogrammprodukt nach Anspruch 5 enthält.

7. Datenverarbeitungssystem, das programmiert ist, das Verfahren nach Anspruch 1 auszuführen.

8. Dynamisches Leitungsmanagementsystem, DLM-System, (205) zum Konfigurieren eines Impulsrauschschutzes, INP, in einer Kommunikationsleitung (203), das Mittel umfasst, die konfiguriert sind zum

   - Konfigurieren (100) der Kommunikationsleitung, einen Weiterübertragungsmodus zum INP zu verwenden;
   - Überwachen (101, 401) einer ersten durchschnittlichen Zeit zwischen Übertragungsfehlern im Weiterübertragungsmodus;

- dann, wenn (102) die erste durchschnittliche Zeit zwischen Übertragungsfehlern unter einem Schwellenwert liegt, Bestimmen von Parametern für einen Vorwärtsfehlerkorrektur- und Verschachtelungsmodus, FEC- und Verschachtelungsmodus, für den INP und Neukonfigurieren (103) der Kommunikationsleitung, um den FEC- und Verschachtelungsmodus zu verwenden;

- Überwachen (104, 404) einer zweiten durchschnittlichen Zeit zwischen Übertragungsfehlern im FEC- und Verschachtelungsmodus und

- dann, wenn (105, 405) die zweite durchschnittliche Zeit zwischen Übertragungsfehlern unter der ersten durchschnittlichen Zeit zwischen Übertragungsfehlern liegt, Neukonfigurieren der Kommunikationsleitung, den Weiterübertragungsmodus zu verwenden.

9. System nach Anspruch 8, wobei die Mittel ferner konfiguriert sind zum Wählen von Parametern in Bezug auf den FEC- und Verschachtelungsmodus derart, dass ein Mehraufwand, der durch den FEC- und Verschachtelungsmodus erzeugt wird, vom beobachteten Mehraufwand im Weiterübertragungsmodus abhängt.

10. System nach Anspruch 9, wobei die Mittel ferner konfiguriert sind zum weiteren Optimieren (106) der Parameter in Bezug auf den FEC- und Verschachtelungsmodus.

## Revendications

1. Procédé de configuration d'une protection contre les bruits impulsionnels (INP) sur une ligne de communication (203), le procédé comprenant :

- la configuration (100) de la ligne de communication pour utiliser un mode de retransmission pour l'INP ;
- la surveillance (101, 401) d'un premier temps moyen entre des erreurs de transmission dans le mode retransmission ;
- si (102) le premier temps moyen entre des erreurs de transmission est inférieur à un seuil, alors la détermination de paramètres pour un mode de correction d'erreur sans voie de retour (FEC) et d'entrelacement pour l'INP, et la reconfiguration (103) de la ligne de communication pour utiliser le mode FEC et d'entrelacement ;
- la surveillance (104, 404) d'un second temps moyen entre des erreurs de transmission dans le mode FEC et d'entrelacement ;
- si (105, 405) le second temps moyen entre des erreurs de transmission est inférieur au premier temps moyen entre des erreurs de transmission, alors la reconfiguration de la ligne de communication pour utiliser le mode de retransmission.

2. Procédé selon la revendication 1, comprenant en outre :

- le choix de paramètres relatifs au mode FEC et d'entrelacement, de sorte qu'un surdébit induit par le mode FEC et d'entrelacement dépende d'un surdébit observé dans le mode de retransmission.

3. Procédé selon la revendication 2, comprenant en outre :

- une optimisation complémentaire (106) de paramètres relatifs au mode FEC et d'entrelacement.

4. Procédé selon la revendication 1, dans lequel la reconfiguration est réalisée quand (411) le mode FEC et d'entrelacement peut corriger un nombre minimum de symboles multitonalités binaires (DMT) erronés consécutifs envoyés sur la ligne de communication (203).

5. Produit de programme informatique, comprenant des instructions exécutables par ordinateur pour réaliser le procédé selon la revendication 1 quand le programme est exécuté sur un ordinateur.

6. Support de stockage lisible par ordinateur, comprenant le produit de programme informatique selon la revendication 5.

7. Système de traitement de données, programmé pour réaliser le procédé selon la revendication 1.

8. Système de gestion de ligne dynamique (DLM) (205) pour configurer une protection contre les bruits impulsionnels (INP) sur une ligne de communication (203), et comprenant des moyens configurés pour :

- configurer (100) la ligne de communication pour utiliser un mode de retransmission pour l'INP ;
- surveiller (101, 401) un premier temps moyen entre des erreurs de transmission dans le mode retransmission ;
- si (102) le premier temps moyen entre des erreurs de transmission est inférieur à un seuil, alors déterminer des paramètres pour un mode de correction d'erreur sans voie de retour (FEC) et d'entrelacement pour l'INP, et reconfigurer (103) la ligne de communication pour utiliser le mode FEC et d'entrelacement ;
- surveiller (104, 404) un second temps moyen entre des erreurs de transmission dans le mode FEC et d'entrelacement ;
- si (105, 405) le second temps moyen entre des erreurs de transmission est inférieur au premier temps moyen entre des erreurs de transmission, alors reconfigurer la ligne de communication pour utiliser le mode de retransmission.

9. Système selon la revendication 8, dans lequel les moyens sont en outre configurés pour choisir des paramètres relatifs au mode FEC et d'entrelacement, de sorte qu'un surdébit induit par le mode FEC et d'entrelacement dépende d'un surdébit observé dans le mode de retransmission.

10. Système selon la revendication 9, dans lequel les moyens sont configurés pour optimiser (106) de façon complémentaire les paramètres relatifs au mode FEC et d'entrelacement.

Fig. 1

Fig. 2

EP 3 493 443 B1

**Fig. 3**

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003126238 A1
- EP 1507369 A1
- JP 2002009883 B
- US 6182264 B1
- EP 2369781 A1